**Europäisches Patentamt**

**European Patent Office**

**Office européen des brevets**

(19)

(11) Veröffentlichungsnummer : **0 413 754 B1**

(12) ## EUROPÄISCHE PATENTSCHRIFT

(45) Veröffentlichungstag der Patentschrift :
**13.01.93 Patentblatt 93/02**

(51) Int. Cl.$^5$ : **G01F 23/28**

(21) Anmeldenummer : **89906037.0**

(22) Anmeldetag : **31.05.89**

(86) Internationale Anmeldenummer :
**PCT/DE89/00346**

(87) Internationale Veröffentlichungsnummer :
**WO 90/00725 25.01.90 Gazette 90/03**

(54) **FÜLLSTANDSANZEIGER.**

(30) Priorität : **07.07.88 DE 3822993**

(43) Veröffentlichungstag der Anmeldung :
**27.02.91 Patentblatt 91/09**

(45) Bekanntmachung des Hinweises auf die
Patenterteilung :
**13.01.93 Patentblatt 93/02**

(84) Benannte Vertragsstaaten :
**DE FR GB IT SE**

(56) Entgegenhaltungen :
**FR-A- 2 402 861**

(56) Entgegenhaltungen :
**MEASUREMENT & AUTOMATION NEWS, Sira,
Nr.54, Oktober - Dezember 1984, Sira Ltd.
South Hill, Chislehurst, Kent
(GB):"Newinstrumentation for road tankers",
Seiten 1-4**

(73) Patentinhaber : **ROBERT BOSCH GMBH
Postfach 30 02 20
W-7000 Stuttgart 30 (DE)**

(72) Erfinder : **GREIN, Nicolas
Reinhold-Frank-Str. 20
W-7500 Karlsruhe 1 (DE)**
Erfinder : **MÜLLER, Klaus
Am Rankrain 12
W-7552 Durmersheim (DE)**

**EP 0 413 754 B1**

## Beschreibung

### Stand der Technik

Die Erfindung geht aus von einem Füllstandsanzeiger nach der Gattung des Hauptanspruchs. Es ist bereits bekannt, den Schall in einen schalleitenden Festkörper einzuleiten und mit Hilfe eines Empfängers die Veränderung der Ausbreitungsgeschwindigkeit (Phasengeschwindigkeit) von Biegewellen zu bestimmen. Im Festkörper wird abhängig von der höhe des Flüssigkeitsspiegels die Ausbreitungsgeschwindigkeit der Biegewellen beeinflußt. Als Referenzgröße dient hierbei die Ausbreitungsgeschwindigkeit im Festkörper bei einem leeren Flüssigkeitsbehälter. hierzu sind zusätzliche Messungen notwendig. Ferner dürfen Sender und Empfänger nicht mit der Flüssigkeit in Berührung kommen, andernfalls ergeben sich Nachteile wegen mangelnder Dichtheit des Senders bzw. des Empfängers oder ungenügender Resistenz der Klebestellen.Auch sind der Nullpunkt und die Meßempfindlichkeit des Füllstandsanzeigers temperaturabhängig.

### Vorteile der Erfindung

Der erfindungsgemäße Füllstandsanzeiger mit den kennzeichnenden Merkmalen des Anspruchs 1 hat demgegenüber den Vorteil, daß er sehr genau mißt. Der Einfluß der Temperatur auf den Nullpunkt und auf die Meßempfindlichkeit des Füllstandsanzeigers kann weitgehend eliminiert werden. Es ist keine Referenzstrecke und keine aufwendige rechnerische Korrektur in einer Auswerteeinheit mehr notwendig. Eine hierfür bisher notwendige, zusätzliche Temperaturbestimmung am Übertragungskörper kann entfallen.

Durch die in den Unteransprüchen aufgeführten Maßnahmen sind vorteilhafte Weiterbildungen der im Anspruch 1 angegebenen Vorrichtung möglich.

### Zeichnung

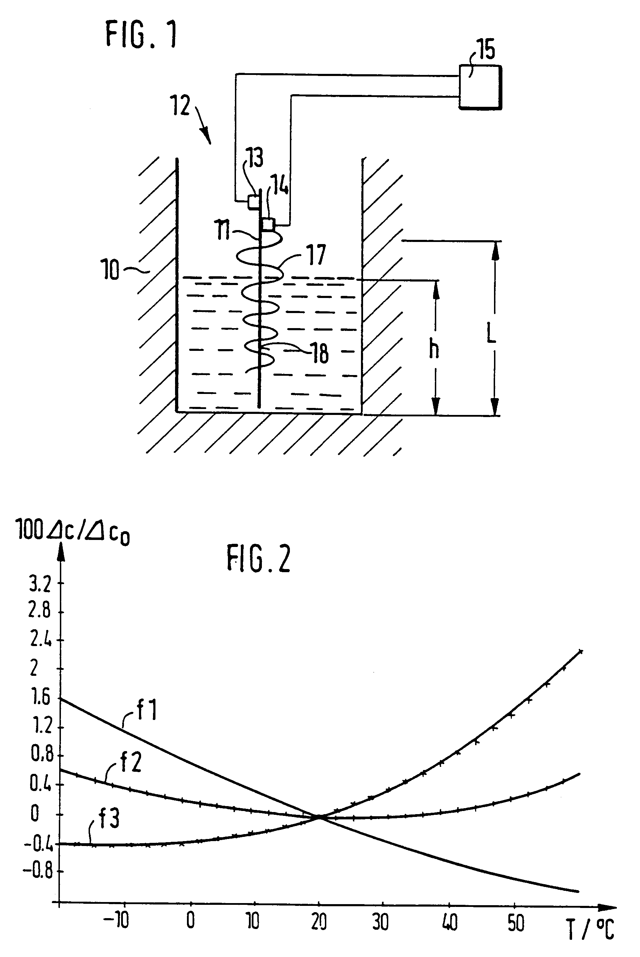

Ein Ausführungsbeispiel der Erfindung ist in der Zeichnung dargestellt und in der nachfolgenden Beschreibung näher erläutert. Es zeigen Figur 1 eine Ausgestaltung des Füllstandsanzeigers im Längsschnitt und Figur 2 ein Meßdiagramm.

### Beschreibung des Ausführungsbeispiels

In Figur 1 ist mit 10 der Tank für den Kraftstoff eines Kraftfahrzeugs bezeichnet, in den ein Schalleiter 11 eines Füllstandsanzeigers 12 für die Kraftstoffmenge in den Tank ragt. Der Schalleiter 11 weist an seinem oberen, aus dem Kraftstoff ragenden Ende einen Sender 13, und einen Empfänger 14 auf. Der Sender 13 ist als Schwinger für insbesondere Ultraschallwellen ausgebildet. Sowohl der Sender 13 als auch der Empfänger 14 sind über der minimalen Füllhöhe L des Tanks 10 angeordnet, so daß beide nicht in den Kraftstoff hineinragen. Die effektive Füllhöhe des Kraftstoffs im Tank 10 ist mit h bezeichnet. Der Sender 13 und der Empfänger 14 sind mit einer nicht näher dargestellten Auswerteeinrichtung 15 verbunden.

Vom Sender 13 werden im Schalleiter 11 Schallwellen 17, sogenannte Biegewellen, d.h. transversale Wellen, deren Ausbreitungsgeschwindigkeit frequenzabhängig ist, angeregt. Bei Biegewellen handelt es sich um Körperschallwellen auf Platten oder Stäßen, deren schwingende Teilchen im wesentlichen senkrecht zur Plattenebene und zur Ausbreitungsrichtung bewegt werden. Ferner ist deren Fortpflanzungsgeschwindigkeit im Bereich der Füllhöhe h des Kraftstoffs wesentlich kleiner als in von der Luft über dem Kraftstoff umgebenden Bereich L - h des Schalleiters 11. Die Schallwellen 17 treten, wie in Figur 1 dargestellt, an den Übergangsflächen 18 mit diesen jeweils umgebenden Medium in Kontakt. Die Beeinflussung der Fortpflanzungsgeschwindigkeit der Schallwellen 17 bestimmt sich nach der Größe der Übergangsfläche 18 und ist abhängig von der geometrischen Form des Schalleiters 11. Abhängig von der Füllstandshöhe h ergibt sich eine mehr oder weniger große Veränderung der Ausbreitungsgeschwindigkeit (Phasengeschwindigkeit) der Biegewellen. Dieser Meßeffekt wird auch bei dem im Stand der Technik genannten Füllstandsanzeiger ausgenützt.

Als temperaturabhängige Fehlerquellen des Nullpunkts des Füllstandsanzeigers 12 gehen die Temperaturabhängigkeiten des Elastizitätsmoduls E des Schalleiters 11, dessen Länge 1, dessen Dicke d und die Dichte 9 des verwendeten Materials ein. Es hat sich als besonders vorteilhaft herausgestellt, daß sich die Temperaturabhängigkeit des Nullpunkts kompensiert, wenn für die Materialeigenschaften des Schalleiters gilt:

$$TKE = -TKL$$

wobei TKE der Temperaturkoeffizient des Elastizitätsmoduls E ist und TKL der Temperaturkoeffizient der Längenausdehnung L des Schalleiters 11 ist. Diese Bedingung wird z.B. recht gut erfüllt vom Werkstoff Thermelast[R] 4002 (Vacuumschmelze, Hanau). Der Temperaturkoeffizient des E-Moduls und des Längenausdehnungskoeffizienten L ist in folgender Tabelle für verschiedene Materialien dargestellt:

| Material | TKE [1/K] | TKL [1/K] |
|---|---|---|
| Kupfer | $-3.2 \ 10^{-4}$ | $1.7 \ 10^{-5}$ |
| Aluminium | $-3.1 \ 10^{-4}$ | $2.4 \ 10^{-5}$ |
| Stahl (unleg.) | $-2.0 \ 10^{-4}$ | $1.1 \ 10^{-5}$ |
| Thermelast$^{(R)}$ 4002 | $-5.0 \ 10^{-6}$ | $8.5 \ 10^{-6}$ |

Ferner hängt die Beeinflussung der Ausbreitungsgeschwindigkeit der Biegewellen in dem Schalleiter 11 durch das umgebende Medium von den physikalischen Renngrößen Dichte und Rompressionsmodul des Mediums ab. Dadurch ist die Ausbreitungsgeschwindigkeit der Biegewellen auch von der Schallgeschwindigkeit in der Flüssigkeit abhängig. Alle diese Größen sind temperaturabhängig, so daß auch der Einfluß auf die Biegewellengeschwindigkeit temperaturabhängig ist. Erfindungsgemäff hat sich herausgestellt, daß dieser Meßfehler stark von der Meßfrequenz der vom Sender 13 eingespeisten Schallwellen abhängt. Dieser Temperatureinfluß ist umso größer, je näher die Frequenz bei der Grenzfrequenz liegt, bei der die Geschwindigkeit der Biegewelle im flüssigkeitsumgebenen Schalleiter gleich der Dichtewelle in der Flüssigkeit ist.

Wird der Füllstandsanzeiger für den Tank eines Kraftfahrzeugs eingesetzt, so liegt im allgemeinen ein Arbeitsbereich von -20° C bis 60° C vor. Für diesen Arbeitsbereich kann man eine Signalfrequenz f des Senders 13 angeben, für welche die mittlere Abweichung gegenüber der bei einer angenommenen mittleren Arbeitstemperatur von 20° C gegebenen Meßempfindlichkeit minimal wird. Unter dem Begriff der Meßempfindlichkeit ist die Änderung der Geschwindigkeit der Biegewellen durch die Flüssigkeitsbelastung zu verstehen. Wird die Frequenz f des Senders 13 in Abhängigkeit von den Flüssigkeitsdaten, den Materialdaten und den Abmessungen des Schalleiters gewählt, so wird die Meßempfindlichkeit des Füllstandsanzeigers kaum mehr durch die oben beschriebenen Parameter verfälscht. Die Daten der Flüssigkeit und die Daten des Materials des Schalleiters liegen jeweils bereits fest. Es hat sich nun vorteilhafterweise herausgestellt, daß die Frequenz $f_{opt}$ annähernd umgekehrt proportional zur Dicke d des Schalleiters 11 ist. Mit Hilfe der Gleichung $f_{opt} \approx 50$ khzmm/d kann die optimale Signalfrequenz $f_{opt}$ bestimmt werden. Diese angegebene Gleichung gilt insbesondere, wenn als Material für den Schalleiter 11 Thermelast$^{(R)}$ 4002 oder auch Stahl verwendet wird. In der Figur 2 ist für diesen Werkstoff und einer Größe von $1000 * 10 * 1,5 \ mm^3$ die Abhängigkeit der Meßempfindlichkeit als Funktion der Temperatur für die drei Meßfrequenzen $f_1 = 20$ khz, $f_2 = 31$ khz und $f_3 = 40$ kHz dargestellt. Als Medium ist hierzu Benzin verwendet. Auf der y-Achse ist als relative Abhängigkeit der Meßempfindlichkeit die Änderung $\Delta c / \Delta c_o$ der Biegewellengeschwindigkeit c durch die Belastung des Mediums aufgetragen. Wie aus der Figur 2 ersichtlich ist, ist für die Frequenz $f_2 = 31$ khz der maximale Fehler im Temperaturbereich von -20° C bis 60° C unter 0,8 %, so daß mit Hilfe einer Auswerteschaltung der mittlere Fehler kleiner als $\pm 0,4$ % ist.

Kombiniert man beide oben beschriebenen Verfahren zur Temperaturkompensation der Meßempfindlichkeit und zur Temperaturkompensation des Nullpunkts, so erhält man einen im weiten Temperaturbereich temperaturunabhängigen Füllstandsanzeiger.

## Patentansprüche

1. Füllstandsanzeiger (12), insbesondere für Kraftstoffbehälter (10) von Kraftfahrzeugen, der mit Hilfe eines Schallwellen aussendenden Senders (13) und eines Emfängers (14) und mit mindestens einem in den Behälter (10) und in das zu bestimmende Medium ragenden, aus mindestens einem schalleitenden Werkstoff bestehenden Übertragungskörper (11) arbeitet, dadurch gekennzeichnet, daß der Temperaturkoeffizient des Elastizitätsmoduls (TKE) des Werkstoffs des Übertragungskörpers (11) bei gegensinnigem Vorzeichen weitgehend dieselbe Größenordnung hat wie der Temperaturkoeffizient seiner Längenausdehnung (TKL).

2. Füllstandsanzeiger nach Anspruch 1, dadurch gekennzeichnet, daß die Frequenz (f) der in den Übertragungskörper (11) vom Sender (13) eingeleiteten Biegewellen weitgehend der Gleichung: $f_{opt} \approx 50$ kHzmm/d entspricht, wobei (d) die Dicke des Übertragungskörpers (11) ist.

## Claims

1. Filling-level indicator (12), especially for fuel tanks (10) of motor vehicles, which works by means of a transmitter (13) emitting sound waves and a receiver (14) and having at least one transmission body (11) projecting into the tank (10) and into the medium to be determined and consisting of at least one sound-conducting material, characterized in that the temperature coefficient of the modulus of elasticity (TKE) of the material of the transmission body (11) is, with an opposite sign, of substantially the same order of magnitude as the temperature coefficient of its longitudinal extension (TKL).

2. Filling-level indicator according to Claim 1, characterized in that the frequency (f) of the flexural waves introduced into the transmission body (11) by the transmitter (13) corresponds substantially to the equation: $f_{opt} \approx 50$ kHzmm/d, (d) being the thickness of the transmission body (11).

## Revendications

1. Indicateur de niveau (12), notamment pour un réservoir de carburant (10) de véhicule automobile, qui fonctionne à l'aide d'un émetteur (13) émettant des ondes sonores et d'un récepteur (14) et avec au moins un corps de transmission (11) constitué d'un matériau acoustiquement conducteur et s'étendant dans le réservoir (10) et dans le fluide à déterminer, indicateur de niveau caractérisé en ce que le coefficient de température du module d'élasticité (TKE) du matériau du corps de transmission (11) a, avec un signe inversé, dans une large mesure le même ordre de grandeur que le coefficient de température de sa dilatation longitudinale (TKL).

2. Indicateur de niveau selon la revendication 1, caractérisé en ce que la fréquence (f) des ondes de flexion envoyées par l'émetteur (13) dans le corps de transmission (11) correspond dans une large mesure à l'égalité : $f_{opt} \approx 50$ kHzmm/d, dans laquelle (d) est l'épaisseur du corps de transmission (11).

# FIG. 1

# FIG.2